# EUROPEAN PATENT APPLICATION

(11) **EP 4 790 811 A2**
(43) Date of publication of application: **12.08.2026**
(21) Application number: 26186586.9
(22) Date of filing: 11.09.2023
(51) Int. Cl.: H01M 50/249

(54) **BATTERY PACK WITH GAS VENTING PATH**

(30) Priority: 04.10.2022 KR 20220126569
(62) Document number(s) of the earlier application(s) in accordance with Art. 76 EPC: 23875087.1 / 4 468 498
(71) Applicant: LG Energy Solution, Ltd., Seoul 07335 (KR)
(72) Inventor: RHIM, So-Eun, 34122 DAEJEON (KR)
(74) Representative: Plasseraud IP

(57) **Abstract**

A battery pack according to the present disclosure includes a plurality of battery modules; and a pack case accommodating the plurality of battery modules, wherein the pack case includes a pack tray having an internal space in which the battery modules are received and an open top; and a pack cover covering the top of the pack tray, coupled to the pack tray and having a gas venting path embedded therein, the gas venting path communicating with each battery module.

## Description

### TECHNICAL FIELD

The present disclosure relates to a battery pack, and more particularly, to a battery pack with a gas venting path for preventing the spread of gases ejected from a battery module in which a thermal event occurred to other battery module and smoothly venting the gases to the outside of a pack case.

The present application claims priority to Korean Patent Application No. 10-2022-0126569 filed on October 4, 2022 in the Republic of Korea, the disclosure of which is incorporated herein by reference.

### BACKGROUND ART

Secondary batteries are attracting attention as a new energy source for improving eco-friendliness and energy efficiency since they notably reduce fossil fuel use and do not produce by-products from the use of energy.

Accordingly, the use of secondary batteries in various types of devices is increasing. For example, secondary batteries are being used as an energy source for not only small multifunctional products such as wireless mobile devices or wearable devices but also electric vehicles and hybrid electric vehicles proposed as an alternative to gasoline vehicles and diesel vehicles or energy storage systems (ESSs).

Lithium secondary batteries being widely used in recent years have the operating voltage of about 2.5V to 4.5V of each battery. Accordingly, electric vehicles or energy storage systems requiring large capacity and high output use a battery module including lithium secondary batteries connected in series and/or in parallel and a battery pack including battery modules connected in series and/or in parallel as an energy source.

The number of lithium secondary batteries included in a battery module may increase may increase, or the number of battery modules included in a battery pack may increase, according to the output or capacity of a battery pack required for an electric vehicle.

However, the battery pack including a large number of lithium secondary batteries may be damaged more severely when a fire and explosion occurs.

For example, when an event such as a short between lithium secondary batteries or abnormal temperature rise occurs in a certain battery module, a large amount of gases may be generated from the lithium secondary batteries, and when the event gets worse, in addition to the gases, high temperature particles (or sparks) including electrode active materials and aluminum particles may be ejected. In this instance, the gases and particles cause thermal damage to the adjacent battery module, and by this reason, there is a very big concern about an additional event in other battery modules.

Accordingly, when the thermal event occurs in the battery module, it is necessary to prevent the spread of gases or particles ejected from the corresponding battery module to the other battery module. Additionally, when the amount of gases in the battery pack increases, the battery pack may structurally destroy or explode by the pressure, so it is necessary to smoothly vent the gases to the outside.

### SUMMARY

### Technical Problem

The present disclosure is designed to solve the above-described technical problem, and therefore the present disclosure is directed to providing a battery pack capable of preventing the spread of gases or particles ejected from a battery module in which a thermal event occurred to adjacent other battery module, and especially, smoothly venting the gases to the outside of a pack case.

The technical problem to be solved by the present disclosure is not limited to the above-described problems, and these and other problems will be clearly understood by those skilled in the art from the following description.

### Technical Solution

A battery pack according to the present disclosure includes a plurality of battery modules; and a pack case accommodating the plurality of battery modules, wherein the pack case includes a pack tray having an internal space in which the battery modules are received and an open top; and a pack cover covering the top of the pack tray, coupled to the pack tray and having a gas venting path embedded therein, the gas venting path communicating with each battery module.

The gas venting path may include at least one first venting path extending in a first direction; and at least one second venting path extending in a second direction perpendicular to the first direction and communicating with the at least one first venting path.

The first venting path may include a plurality of first venting paths, including two outer paths located at two opposite edge areas of the pack cover and extending in the first direction and at least one inner path located between the two outer paths and extending in the first direction, and the at least one second venting path may be perpendicular to the two outer paths and the inner path.

The gas venting path may further include a mesh filter at an intersection of the first venting path and the second venting path.

The mesh filter may have a smaller mesh opening size as it is closer to an exit of the gas venting path.

Each battery module may have a gas venting hole in an upper surface, and the pack cover may include a connection pipe connecting the gas venting hole to the gas venting path.

The gas venting hole may be covered with a packing member configured to rupture at or above a predetermined pressure.

The pack cover may include a tray connection portion protruding from one end portion of the first venting path in an outward direction of the pack cover, and the pack tray may include a gas outlet through which gases are vented to outside; a connection groove portion that is fit-coupled to the tray connection portion; and a duct portion disposed in a body of the pack tray to allow the connection groove portion and the gas outlet to communicate with each other.

The pack tray may include at least one first partition wall to divide the internal space, the pack cover may include a second partition wall that is fit-coupled to the first partition wall, and the adjacent battery modules may be spatially blocked by the first partition wall and the second partition wall.

The first partition wall may have a top groove portion recessed to a predetermined depth from a top surface, and the second partition wall may have an insertion portion that is inserted into the top groove portion.

The insertion portion may have a concave portion recessed inwards in a concave shape, and the top groove portion may have a compression portion shaped to match the concave portion when the insertion portion is inserted into the top groove portion.

The gas venting path may include a plurality of unit gas venting paths communicating with the plurality of battery modules in a one-to-one relationship.

According to another aspect of the present disclosure, there is provided a vehicle including the above-described battery pack.

### Advantageous Effects

According to an aspect of the present disclosure, it may be possible to provide the battery pack capable of preventing the spread of gases or particles ejected from a battery module in which a thermal event occurred to adjacent other battery module, and venting the gases to the outside of the pack case smoothly.

In particular, the battery pack according to an aspect of the present disclosure has the gas venting path in the pack cover covering the top of the battery modules, and the gas venting path is divided into branches. Accordingly, when particles build up on a certain gas movement path, blocking the flow of gases in the corresponding gas movement path, the gases may be allowed to flow out through other gas movement path.

Additionally, the mesh filter is applied at each intersection of the gas venting paths, and as it is closer to the exit of the gas venting path, the mesh filter having smaller opening size is applied, thereby preventing particles from easily escaping out of the battery pack.

The effect of the present disclosure is not limited to the above-described effects, and these and other effects will be clearly understood by those skilled in the art from the present disclosure and the accompanying drawings.

### BRIEF DESCRIPTION OF THE DRAWINGS

FIG. 1 is an assembled perspective view of a battery pack according to an embodiment of the present disclosure.
FIG. 2 is a schematic perspective view of the battery pack of FIG. 1, in which a pack tray and a pack cover are separated.
FIG. 3 is a schematic horizontal cross-sectional view of the battery pack of FIG. 1, taken along the line A-A'.
FIG. 4 is a schematic vertical cross-sectional view of the battery pack of FIG. 1.
FIG. 5 is an enlarged view of section B in FIG. 4.
FIG. 6 is a diagram showing a variation of the first partition wall and the second partition wall of FIG. 5.
FIG. 7 is a schematic horizontal cross-sectional view of a battery pack according to another embodiment of the present disclosure.
FIG. 8 is a partial enlarged view of a gas venting path of FIG. 7.

### DETAILED DESCRIPTION

Hereinafter, exemplary embodiments of the present disclosure will be described in detail with reference to the accompanying drawings. Prior to the description, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation. Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made at the time the application was filed.

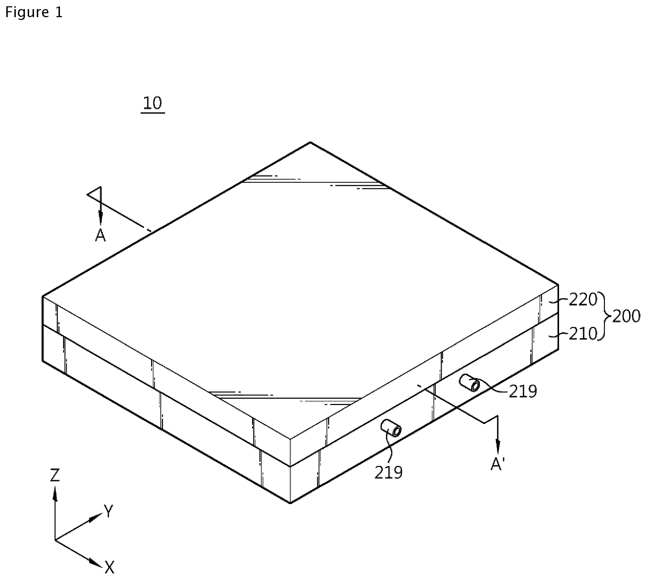

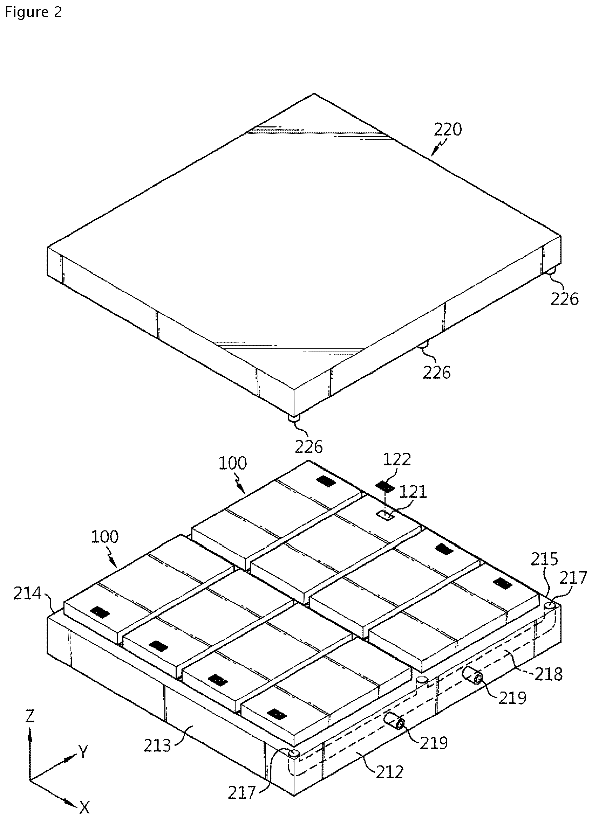

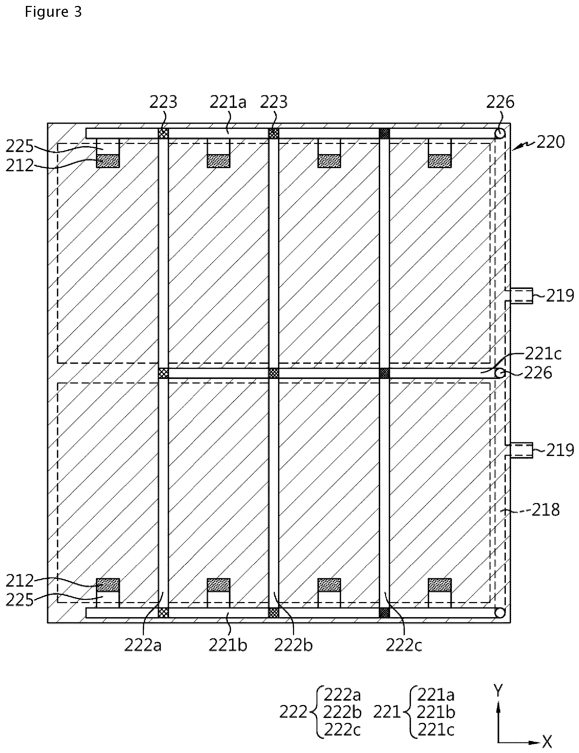

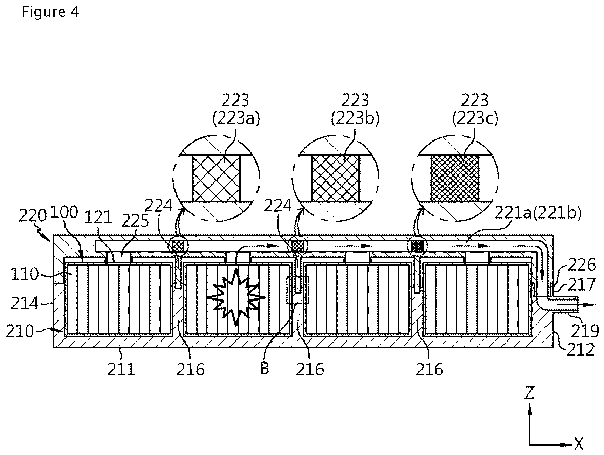

FIG. 1 is an assembled perspective view of a battery pack according to an embodiment of the present disclosure, FIG. 2 is a schematic perspective view of the battery pack of FIG. 1, in which a pack tray and a pack cover are separated, FIG. 3 is a schematic horizontal cross-sectional view of the battery pack of FIG. 1, taken along the line A-A', and FIG. 4 is a schematic vertical cross-sectional view of the battery pack of FIG. 1.

Referring to FIGS. 1 to 4, the battery pack 10 according to an embodiment of the present disclosure includes a plurality of battery modules 100 and a pack case, and the pack case 200 has gas venting path 221,222 communicating with each battery module 100. The gas venting path 221,222 refers to a passage for venting gases out of the pack case 200 when a thermal event occurs in a certain battery module 100 included in the battery pack 10.

In the battery pack 10 according to the present disclosure, the gas venting path 221,222 may be configured to avoid thermal damage to other battery modules 100 while venting gases out of the pack case 200, and prevent high temperature particles (electrode plate fragments or active material fragments ejected from battery cells, etc.) from easily escaping out of the battery pack 10, thereby preventing the high temperature particles from acting as a source of fire outside of the battery pack 10. Hereinafter, the pack case 200 having the gas venting path 221,222 will be described in detail.

The pack case 200 according to an embodiment of the present disclosure includes the pack tray 210 and the pack cover 220 that may be coupled to each other. As shown in FIGS. 1 and 2, the pack tray 210 may have an internal space in which the plurality of battery modules 100 is received and an open top.

For example, the pack tray 210 may include a base portion 211 to support the bottom of the battery modules 100, and a wall portion that forms a wall along the outer periphery of the base portion 211. The base portion 211 may be approximately in the shape of a rectangular plate, and the wall portion may include first to fourth walls that form the wall along the outer periphery of the rectangular plate-shaped base portion 211. For example, in the exemplary configuration of FIG. 2, the wall portion may include the first wall 212 in +X direction, the second wall 213 in -Y direction, the third wall 214 in -X direction and a fourth wall 215 in +Y direction. The pack cover 220 may cover the top of the pack tray 210 and be coupled to the pack tray 210.

In particular, the pack cover 220 according to this embodiment has the gas venting path 221,222 inside. In other words, the gas venting path 221,222 may be embedded in a frame that forms the pack cover 220 as shown in FIG. 3. When the gas venting path 221,222 is embedded in the pack cover 220, the inside of the pack case 200 may be divided into a space in which the battery modules 100 are arranged and a space in which venting gases move. In particular, when the gas venting path 221,222 is embedded in the pack cover 220 having large area, it may be possible to diversify the gas venting path and increase the gas movement area or the total passage volume. Accordingly, the gas venting path of the present disclosure may be effective in smoothly venting a large amount of gases to the outside of the battery pack.

Additionally, since gases generated from a certain battery module 100 are allowed to move along the gas venting path embedded in the pack cover 220, the gases do not flow into the space in which the battery modules 100 are arranged. Accordingly, it may be possible to prevent direct contact of venting gases with other battery modules 100, thereby avoiding thermal damage to other battery modules 100.

The battery module 100 may include battery cells 110 and a module housing accommodating the battery cells 110. The battery cell 110 may include any type of secondary battery, for example, a prismatic secondary battery, a cylindrical secondary battery or a pouch-type secondary battery, and the module housing may be made of a material having high mechanical strength to protect the battery cells 110 from external impacts and vibration, and preferably metal.

As shown in FIG. 2, each battery module 100 may be disposed in the pack tray 210 and have a gas venting hole 121 in the upper surface. Additionally, each battery module 100 may be configured such that the gas venting hole 121 is individually connected to the gas venting path of the pack cover 220.

The upper surface of the battery module 100 may refer to a top plate of the module housing covering the top of the battery cells 110, and the gas venting hole 121 may be formed by cutting or drilling a portion of the top plate of the module housing. For example, when a fire occurs in the battery cell 110 due to a short or overcharge, flames, high temperature particles and gases may be generated from the battery cell 110. In this instance, the gases may be vented from the inside of the battery module 100 to the outside through the gas venting hole 121. A packing member 122 may be attached to the gas venting hole 121. In normal situations, the packing member 122 seals the gas venting hole 121 to prevent external impurities from entering the battery module 100 housing.

The packing member 122 may be made of a material that ruptures at or above a predetermined pressure or melts by heat, for example, plastics. That is, in the event of the fire in the battery module 100, when the plastic packing member 122 is destroyed by the pressure of gases or heat, the gas venting hole 121 is open.

The gas venting hole 121 may communicate with the gas venting path of the pack cover 220. To this end, the pack cover 220 may further include a connection pipe 225 connecting the gas venting hole 121 to the gas venting path. The connection pipe 225 may have, for example, flexibility and elasticity like bellows.

As shown in FIGS. 3 and 4, the pack cover 220 may include the connection pipes 225, and when coupled to the pack tray 210, the connection pipe 225 may match the corresponding gas venting hole 121 of the battery module 100 in the vertical direction. The connection pipe 225 may have one end portion communicating with the gas venting path and the other end portion protruding from the surface of the pack cover 220 and be configured to cover the gas venting hole 121 of the battery module 100.

By this configuration, when the thermal event occurs, gases from each battery module 100 may fully flow into the gas venting path of the pack cover 220. It may be possible to prevent the venting gases from spreading to the adjacent other battery module 100.

Referring back to FIG. 3, the gas venting path of the pack cover 220 according to an embodiment of the present disclosure includes at least one first venting path 221 extending in a first direction (X direction) and at least one second venting path 222 extending in a second direction (Y direction) perpendicular to the first direction and communicating with the at least one first venting path 221.

The first venting path 221 may include a plurality of first venting paths, and may include two outer paths 221a,221b located at two opposite edge areas of the pack cover 220 and extending in the first direction and at least one inner path 221c located between the two outer paths 221a,221b and extending in the first direction.

The second venting path 222 may extend in the second direction (Y direction) perpendicular to the two outer paths 221a,221b and the inner path 221c and communicate with them at the intersection. The second venting path 222 may include a plurality of second venting paths, and the plurality of second venting paths 222 may be arranged at a predetermined interval along the first direction. The pack cover 220 of this embodiment may include three second venting paths 222a, 222b,222c arranged at an interval corresponding to the width of the battery module 100 along the first direction (X direction), but the scope of protection of the present disclosure is not limited thereto. That is, for example, the pack cover 220 may be configured such that two or four or more second venting paths 222 are embedded in the pack cover 220.

By this configuration, it may be possible to diversify the paths through which venting gases move toward a gas outlet 219 of the battery pack 10. That is, venting gases may move along the two outer paths 221a,221b at the two edges of the pack cover 220 as well as the plurality of second venting paths 222 perpendicular to the two outer paths 221a,221b. For example, when particles accumulate at a specific portion of the gas venting path, the flow of venting gases may be obstructed. However, by the gas venting path configuration according to this embodiment, it may be possible to diversify the paths through which venting gases move, thereby avoiding the clogged area and allowing the venting gases to move through other paths.

In particular, the large scale battery pack 10 includes a large number of battery modules 100. When gases and particles are generated from one or more battery modules 100 included in the large scale battery pack 10 at the same time, in order to vent the gases smoothly and quickly, like this embodiment, the gas venting path with gas movement path diversity using the large area of the pack cover 220 may be effective.

As shown in FIGS. 3 and 4, the gas venting path may further include a mesh filter 223 at the intersection of the first venting path 221 and the second venting path 222. When high temperature particles come out of the battery pack 10, they may act as a source of fire outside of the battery pack 10. Accordingly, the mesh filter 223 plays a role in keeping the particles from moving, thereby preventing the particles from going out of the battery pack 10. In particular, mesh filters 223a,223b,223c according to this embodiment may be applied to the gas venting path such that as they are closer to the exit of the gas venting path, i.e., the gas outlet 219, the mesh opening size is smaller. Accordingly, when venting gases and particles move together as indicated by the arrow in FIG. 4, the particles may be filtered n times (n is a natural number) or more. Additionally, the mesh opening size of the mesh filters 223a,223b,223c decreases in a sequential order so as to effectively disperse the amount of particles accumulating in the gas venting path between one mesh filter 223 and another mesh filter 223 by size. Additionally, while the particles pass through the mesh filter 223, the temperature decreases by heat exchange with the mesh filter of metal, and finally, only low temperature ultramicro particles may be forced out the battery pack 10.

Referring back to FIGS. 2, 3 and 4, the pack cover 220 may include a tray connection portion 226 protruding from one end portion of the first venting path 221 in the outward direction of the pack cover 220, and the pack tray 210 may include the gas outlet 219 where gases exit, a connection groove portion 217 fit-coupled to the tray connection portion 226 and a duct portion 218 disposed in the body of the pack tray 210 to allow the connection groove portion 217 and the gas outlet 219 to communicate with each other.

For example, as shown in FIG. 2, the connection groove portion 217 may be disposed at a corner area of the pack tray 210 where the first wall 212 and the second wall 213 cross each other and the first wall 212 and the fourth wall 215 cross each other and a central area of the first wall 212, and the tray connection portion 226 may protrude downward from the surface of the pack cover 220 so as to be fit-coupled and decoupled to/from the connection groove portion 217 in the vertical direction.

The tray connection portion 226 may be present in number corresponding to the number of first venting paths 221 and communicate with the first venting path 221. For example, as shown in FIG. 3, each tray connection portion 226 may be disposed at one end portion of the two outer paths 221a,221b and one end portion of one inner path 221c. Meanwhile, this embodiment shows one inner path 221c, but unlike this embodiment, the pack cover 220 may have two or three or more inner paths 221c, and the tray connection portion 226 may be disposed at one end portion of each inner path 221c.

As shown in FIG. 4, the tray connection portion 226 of the pack cover 220 and the connection groove portion 217 of the pack tray 210 may be connected by an interference fit when the pack cover 220 and the pack tray 210 are coupled to each other. Additionally, the connection groove portion 217 of the pack tray 210 may communicate with the gas outlet 219 through the duct portion 218 embedded in the first wall 212 of the pack tray 210 as indicated by the hidden line in FIG. 3. By this configuration, the gas venting path of the pack cover 220 may communicate with the gas outlet 219 of the pack tray 210 to allow gases to be eventually vented to the outside of the battery pack 10 through the gas outlet 219.

Meanwhile, the battery pack 10 according to an embodiment of the present disclosure may be configured to divide the internal space of the pack case 200 to prevent thermal propagation between the battery modules 100 when the thermal event occurs. To this end, the pack tray 210 may include at least one first partition wall 216 to divide the internal space, and the pack cover 220 may include a second partition wall 224 fit-coupled to the first partition wall 216, and when the pack cover 220 and the pack tray 210 are coupled to each other as shown in FIG. 4, the adjacent battery modules 100 may be spatially blocked by the first partition wall 216 and the second partition wall 224.

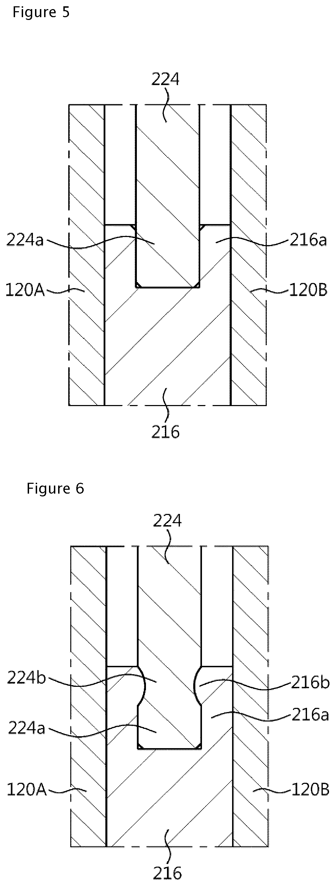

Describing in more detail with reference to FIGS. 4 and 5, the first partition wall 216 of the pack tray 210 may have a top groove portion 216a recessed to a predetermined depth from the top surface, and the second partition wall 224 of the pack cover 220 may have an insertion portion 224a that may be inserted into the top groove portion 216a. Accordingly, when the pack cover 220 and the pack tray 210 are coupled to each other, the first partition wall 216 and the second partition wall 224 may be connected to each other and the internal space of the pack case 200 may be divided into smaller areas. For example, a space between a side portion 120A of a module case of any one battery module 100 and a side portion 120B of the other battery module 100 may be blocked by the first partition wall 216 and the second partition wall 224 fit-coupled to each other. Accordingly, when the thermal event occurs in any one battery module 100, it may be possible to delay thermal propagation to the adjacent other battery module 100 to the maximum extent.

FIG. 6 shows a variation of the first partition wall 216 and the second partition wall 224 of FIG. 5, with enhanced coupling strength of the first partition wall 216 and the second partition wall 224. The insertion portion 224a of the second partition wall 224 according to the exemplary configuration of FIG. 6 includes a concave portion 224b recessed inwards in a concave shape, and the top groove portion 216a of the first partition wall 216 includes a compression portion 216b shaped to match the concave portion 224b.

When the insertion portion 224a of the second partition wall 224 is completely inserted into the top groove portion 216a of the first partition wall 216, the concave portion 224b and the compression portion 216b may match as shown in FIG. 6. Unless the compression portion 216b is forced to spread out to form a space, the concave portion 224b does not easily slip out of the compression portion 216b, and this structure may enhance the coupling strength between the first partition wall 216 and the second partition wall 224.

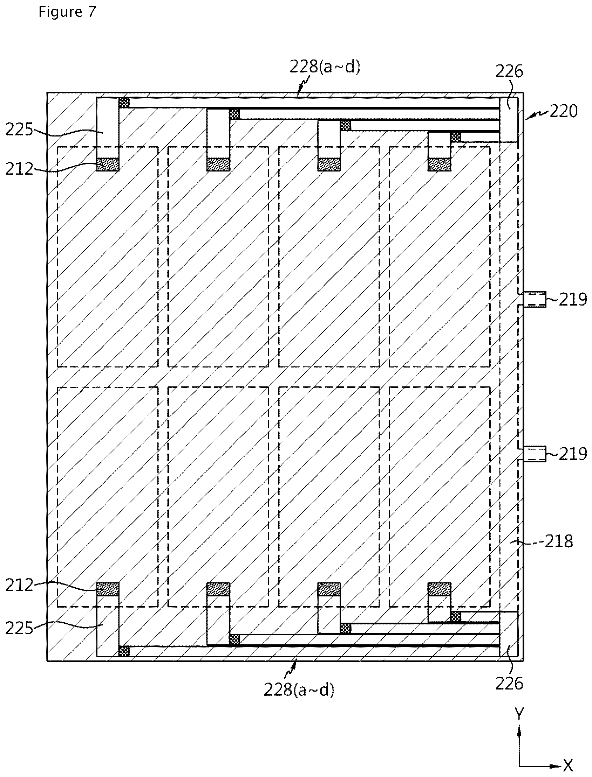

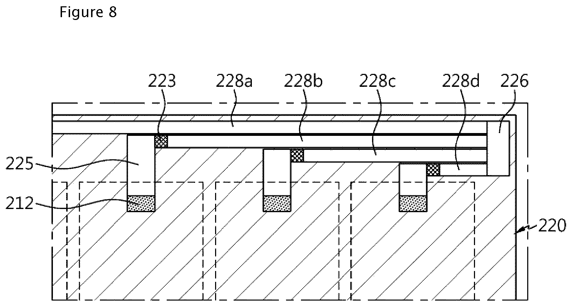

FIG. 7 is a schematic horizontal cross-sectional view of the battery pack 10 according to another embodiment of the present disclosure, and FIG. 8 is a partial enlarged view of the gas venting path of FIG. 7.

The same reference numerals as the previous embodiment indicate the same elements, and to avoid redundancy, description of the same elements is omitted and the following description is made based on differences between this embodiment and the previous embodiment.

The gas venting path according to another embodiment of the present disclosure may include a plurality of unit gas venting paths 228a~228d communicating with the plurality of battery modules 100 in a one-to-one relationship.

In the same way as the previous embodiment, the battery pack 10 according to another embodiment of the present disclosure has the gas venting path embedded in the pack cover 220, and the gas venting path communicates with each battery module 100. However, in another embodiment of the present disclosure, the gas movement path corresponding to the inner path 221c of the first venting path 221 and the second venting path 222 of the previous embodiment is omitted. Additionally, the previous embodiment is structured such that the outer paths 221a,221b of the first venting path 221 communicate with the plurality of battery modules 100, but the gas venting path according to another embodiment of the present disclosure is configured such that one of the unit gas venting paths 228a~228d individually communicates with one battery module 100 as shown in FIGS. 7 and 8.

By the gas venting path configuration according to another embodiment of the present disclosure, gases generated from each battery module 100 may move along each unit gas venting path 228a~228d and be vented to the outside of the battery pack 10 through the gas outlet 219.

Accordingly, for example, since gases generated from any one battery module 100 move along the unit gas venting paths 228a~228d connected to the corresponding battery module 100, the likelihood that the gases flow into other battery module 100 is very low.

Additionally, when gases and particles are ejected from the plurality of battery modules 100 at the same time, the particles ejected from different battery modules 100 do not accumulate in different unit gas venting paths 228a~228d, so many particles may not build up on each unit gas venting path 228a~228d. Additionally, since the gases from each battery module 100 move along each unit gas venting path 228a~228d, the flow is smooth and the movement distance of the gases to the gas outlet 219 is shorter than that of the previous embodiment, thereby venting the gases to the outside of the battery pack 10 more quickly.

Meanwhile, the battery pack according to the present disclosure may be applied to a vehicle such as an electric vehicle or a hybrid electric vehicle. That is, the vehicle according to the present disclosure may include the battery pack according to the present disclosure. The battery pack may be, for example, installed at a vehicle body frame below the seat or a trunk space.

The terms indicating directions such as upper, lower, left, right, front and rear are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.
Preferred examples of the Invention are specified in the following items:
[Item 1] A battery pack, comprising:
   a plurality of battery modules; and
   a pack case accommodating the plurality of battery modules,
   wherein the pack case includes:
      a pack tray having an internal space in which the battery modules are received and an open top; and
      a pack cover covering the top of the pack tray, coupled to the pack tray and having a gas venting path embedded therein, the gas venting path communicating with each battery module.
[Item 2] 2The battery pack according to item 1, wherein the gas venting path includes:
   at least one first venting path extending in a first direction; and
   at least one second venting path extending in a second direction perpendicular to the first direction and communicating with the at least one first venting path.
[Item 3] The battery pack according to item 2, wherein the first venting path includes a plurality of first venting paths, including:
   two outer paths located at two opposite edge areas of the pack cover and extending in the first direction, and at least one inner path located between the two outer paths and extending in the first direction, and
   wherein the at least one second venting path is perpendicular to the two outer paths and the inner path.
[Item 4] The battery pack according to item 2, wherein the gas venting path further includes a mesh filter at an intersection of the first venting path and the second venting path.
[Item 5] The battery pack according to item 4, wherein the mesh filter includes a plurality of mesh filters, and
   wherein a mesh opening size is smaller as it is closer to an exit of the gas venting path.
[Item 6] The battery pack according to item 2, wherein each battery module has a gas venting hole in an upper surface, and
   wherein the pack cover includes a connection pipe connecting the gas venting hole to the gas venting path.
[Item 7] The battery pack according to item 6, wherein the gas venting hole is covered with a packing member configured to rupture at or above a predetermined pressure.
[Item 8] The battery pack according to item 2, wherein the pack cover includes a tray connection portion protruding from one end portion of the first venting path in an outward direction of the pack cover, and
   wherein the pack tray includes:
   a gas outlet through which gases are vented to outside;
   a connection groove portion that is fit-coupled to the tray connection portion; and
   a duct portion disposed in a body of the pack tray to allow the connection groove portion and the gas outlet to communicate with each other.
[Item 9] The battery pack according to item 1, wherein the pack tray includes at least one first partition wall to divide the internal space,
   wherein the pack cover includes a second partition wall that is fit-coupled to the first partition wall, and
   wherein the adjacent battery modules are spatially blocked by the first partition wall and the second partition wall.
[Item 10] The battery pack according to item 9, wherein the first partition wall has a top groove portion recessed to a predetermined depth from a top surface, and the second partition wall has an insertion portion that is inserted into the top groove portion.
[Item 11] The battery pack according to item 10, wherein the insertion portion has a concave portion recessed inwards in a concave shape, and
   wherein the top groove portion has a compression portion shaped to match the concave portion when the insertion portion is inserted into the top groove portion.
[Item 12] The battery pack according to item 1, wherein the gas venting path includes a plurality of unit gas venting paths communicating with the plurality of battery modules in a one-to-one relationship.
[Item 13] A vehicle comprising the battery pack according to any one of items 1 to 12.

## Claims

1. A battery pack (10), comprising:
a plurality of battery modules (100); and
a pack case (200) accommodating the plurality of battery modules (100),
wherein the pack case (200) includes:
a pack tray (210) having an internal space in which the battery modules (100) are received and an open top; and
a pack cover (220) covering the top of the pack tray (210), coupled to the pack tray (210) and having a gas venting path (228a~228d) embedded therein, the gas venting path (228a~228d) communicating with each battery module (100),
wherein the gas venting path (228a~228d) includes:
at least one first venting path (221) extending in a first direction; and
at least one second venting path (222) extending in a second direction perpendicular to the first direction and communicating with the at least one first venting path (221),
wherein the pack cover (220) includes a tray connection portion (226) protruding from one end portion of the first venting path (221) in an outward direction of the pack cover (220), and
wherein the pack tray (210) includes:
a gas outlet (219) through which gases are vented to outside;
a connection groove portion (217) that is fit-coupled to the tray connection portion (226); and
a duct portion (218) disposed in a body of the pack tray (210) to allow the connection groove portion and the gas outlet (219) to communicate with each other.

2. The battery pack (10) according to claim 1, wherein the first venting path (221) includes a plurality of first venting paths, including:
two outer paths (221a,221b) located at two opposite edge areas of the pack cover (220) and extending in the first direction, and at least one inner path (221c ) located between the two outer paths (221a,221b) and extending in the first direction, and
wherein the at least one second venting path (222) is perpendicular to the two outer paths (221a,221b) and the inner path (221c).

3. The battery pack (10) according to claim 1, wherein the gas venting path (228a~228d) further includes a mesh filter (223) at an intersection of the first venting path (221) and the second venting path (222).

4. The battery pack (10) according to claim 3, wherein the mesh filter (223) includes a plurality of mesh filters, and
wherein a mesh opening size is smaller as it is closer to an exit of the gas venting path (228a~228d).

5. The battery pack (10) according to claim 1, wherein each battery module has a gas venting hole (121) in an upper surface, and
wherein the pack cover (220) includes a connection pipe connecting the gas venting hole (121) to the gas venting path (228a~228d).

6. The battery pack (10) according to claim 5, wherein the gas venting hole (121) is covered with a packing member (122) configured to rupture at or above a predetermined pressure.

7. The battery pack (10) according to claim 1, wherein the pack tray (210) includes at least one first partition wall (216) to divide the internal space,
wherein the pack cover (220) includes a second partition wall (224) that is fit-coupled to the first partition wall (216), and
wherein the adjacent battery modules (100) are spatially blocked by the first partition wall (216) and the second partition wall (224).

8. The battery pack (10) according to claim 7, wherein the first partition wall (216) has a top groove portion (216a ) recessed to a predetermined depth from a top surface, and the second partition wall (224) has an insertion portion (224a ) that is inserted into the top groove portion (216a).

9. The battery pack (10) according to claim 8, wherein the insertion portion (224a ) has a concave portion recessed inwards in a concave shape, and
wherein the top groove portion (216a) has a compression portion shaped to match the concave portion when the insertion portion (224a) is inserted into the top groove portion (216a).

10. The battery pack (10) according to claim 1, wherein the gas venting path (228a~228d) includes a plurality of unit gas venting paths (228a~228d) communicating with the plurality of battery modules (100) in a one-to-one relationship.

11. A vehicle comprising the battery pack (10) according to any one of claims 1 to 10.
